# EUROPEAN PATENT APPLICATION

(11) **EP 4 462 084 A1**
(43) Date of publication of application: **13.11.2024**
(21) Application number: 23882911.3
(22) Date of filing: 21.09.2023
(51) Int. Cl.: G01D 21/02, G01B 11/06, G01B 11/02, G01J 5/00, G01J 5/02

(54) **DEVICE FOR MEASURING TEMPERATURE AND THICKNESS OF FILM AND MEASUREMENT METHOD USING SAME**

(30) Priority: 27.10.2022 KR 20220140518; 20.09.2023 KR 20230125503
(71) Applicant: LG Chem, Ltd., Yeongdeungpo-gu Seoul 07336 (KR)
(72) Inventor: LEE, Do Hyun, Daejeon 34122 (KR); LEE, Seung Heon, Daejeon 34122 (KR)
(74) Representative: Plasseraud IP
(86) International application number: PCT/KR2023/014403
(87) International publication number: WO 2024/090804

(57) **Abstract**

The present disclosure relates to a film temperature and thickness measurement apparatus and a measurement method using the same, which can enable manufacturing of a film with a uniform thickness by sequentially measuring the surface temperature and thickness of a film at the same point of the film that is extruded or coating molded in an in-line method, and through control of the temperature and the thickness of the film based on the measured data.

## Description

### Technical Field

The present disclosure claims the benefit of the filing date of Korean Patent Application No. 10-2022-0140518, filled with the Korean Intellectual Property Office on October 27, 2022, the entire contents of which are included in the present disclosure.

The present disclosure relates to a film temperature and thickness measurement apparatus and a measurement method using the same, which can sequentially measure the temperature and thickness of a film that is manufactured during a manufacturing process of a polymer film using an in-line method.

### Background Art

In general, a porous membrane type polymer film is used as a separator for a secondary battery. Such a polymer film is generally manufactured through molding of polymer resin melt discharged through an extruder into a film form, and then through stretch ing and thermal fixing processes.

Such a film manufacturing process proceeds with an in-line method of a roll-to-roll structure, and the manufactured result is in the form of a rectangular separator sheet, and is then cut to a predetermined size to be used as a separator base material later.

It is preferable that the polymer film that is used as the separator has a uniform thickness deviation throughout the separator for product yield improvement. Accordingly, during an extrusion process of the polymer film, it is necessary to control the thickness uniformity of the manufactured film through measurement of the thickness of the film.

In the related art, only the thickness of a polymer film has been mainly measured, but the thickness of the manufactured film may be changed depending on the real-time process temperature due to a thermal expansion coefficient of the polymer material. In case that a difference occurs in uniformity of the film thickness as above, product defects may occur due to the swelling and thickness deviation of a material in a post process.

Up to now, since there is not a real-time measurement method according to a temperature change of the film, measurement of the film thickness change and prediction of the temperature change are not possible. Accordingly, in the related art, products have been manufactured through the sampling type thickness actual measurement after the process change, the sample measurement according to material properties, and the measuring instrument calibration progress.

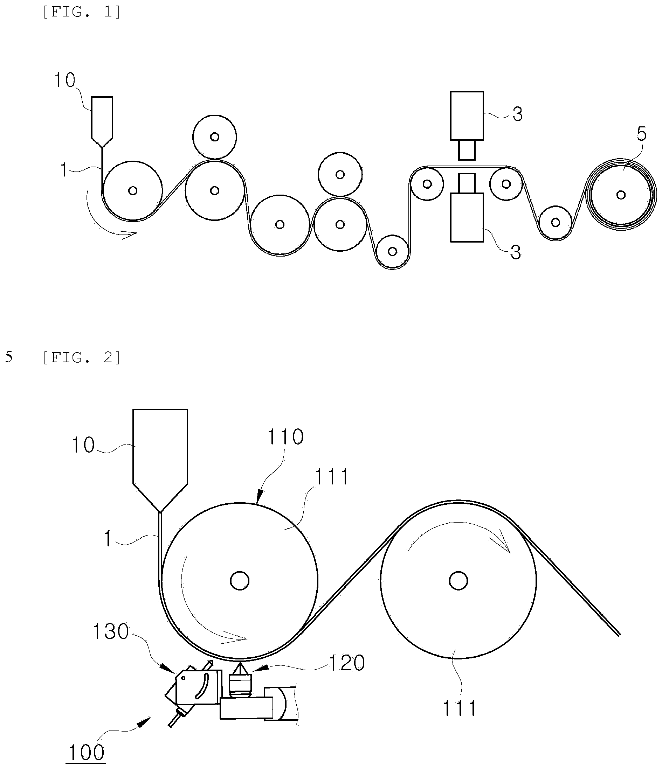

Specifically, referring to FIG. 1, in the related art, the thickness of a film 1 is measured by utilizing a scan type loading level density measuring instrument 3 in a separate process after extrusion molding of the film 1 through an extruder 10. In this case, a preparatory work for identifying a thickness value of a product is required in the loading level density measuring instrument 3. That is, it is possible to identify the thickness of the film 1 after the calibration work by utilizing a sample of the film 1.

However, there are cumbersome problems in that identification of the thickness actual measurement of the sample of the film 1 becomes possible in a state where manufacturing equipment is suspended after rewinding of a winding roll 5, and the sample temperature of the film 1 must be measured by utilizing a separate infrared surface temperature sensor.

### DISCLOSURE

### Technical Problem

The present disclosure intends to solve the above-described problems, and an object of the present disclosure is to provide a film temperature and thickness measurement apparatus and a measurement method using the same, which can enable manufacturing of a film with a uniform thickness by sequentially measuring the surface temperature and thickness of a film at the same point of the film that is extruded or coating molded in an in-line method, and through control of the temperature and the thickness of the film based on the measured data.

### Technical Solution

An apparatus for measuring a temperature and a thickness of a film being extruded and coating molded according to the present disclosure for implementing the object described above may include: a transport unit provided with rotating rolls configured to transport the film being molded in one direction; a thickness measurement unit installed to be spaced apart from an outer periphery surface of the rotating roll and configured to measure the thickness of the film being transported; a temperature measurement unit disposed to be adjacent to the thickness measurement unit and configured to measure a surface temperature of the film being transported; and a controller configured to determine whether measured values measured through the thickness measurement unit and the temperature measurement unit deviate from reference values, respectively.

In this case, the temperature measurement unit and the thickness measurement unit may be disposed on the same line as a transportation direction of the film so as to be able to sequentially measure the surface temperature and the thickness of the film at the same point of the film being transported.

Here, the thickness measurement unit and the temperature measurement unit may be disposed in order from an upstream to a downstream of the transportation direction of the film.

Further, the temperature measurement unit and the thickness measurement unit may be disposed in order from an upstream to a downstream of the transportation direction of the film.

Further, the thickness measurement unit may include: a guide rail disposed to be spaced apart in parallel to a central axis line of the rotating roll; a moving plate reciprocally coupled to the guide rail along a length direction of the guide rail through reception of a power; and a laser displacement sensor coupled onto the moving plate through a first bracket, and configured to measure the thickness of the film by irradiating a laser toward a surface of the film being transported by the rotating roll.

Further, the moving plate may be reciprocally coupled to the guide rail along a length direction that crosses the length direction of the guide rail, and may be configured to adjust a gap distance from the outer periphery surface of the rotating roll.

Further, the first bracket may be coupled in a way of being rotatable by a predetermined angle along a transportation direction of the film with a first hinge shaft of the moving plate as a center of rotation, and may be configured to adjust a laser irradiation angle of the laser displacement sensor.

Further, the temperature measurement unit may include: a second bracket coupled to be able to move forward and backward along a direction that crosses a length direction of the rotating roll on the first bracket; and an infrared temperature sensor installed on the second bracket and configured to measure a temperature of the surface of the film that is transported by the rotating roll.

Further, the infrared temperature sensor may be coupled in a way of being rotatable by a predetermined angle along a transportation direction of the film with a second hinge shaft of the second bracket as a center of rotation, and may be configured to adjust an infrared irradiation location of the infrared temperature sensor.

Further, the temperature measurement unit and the thickness measurement unit may be configured to measure a proximity location within 0 to 30 mm along the transportation direction of the film in case that the film is extrusion molded.

Further, the temperature measurement unit and the thickness measurement unit may be configured to measure a proximity location within 0 to 100 mm along the transportation direction of the film in case that the film is coating molded.

Meanwhile, a method for measuring a temperature and a thickness of a film may include the steps of: forming a film through an extrusion or coating process; transporting the film being molded in one direction through rotating rolls; measuring a temperature of a film at a predetermined point by irradiating an infrared ray toward a surface of the film being transported by the rotating rolls; measuring a thickness of the film by irradiating the laser at the same or proximity location of the surface of the film of which the temperature is measured; determining whether measured values of the temperature and the thickness of the film deviate from reference values, respectively; and changing a condition of the film manufacturing process in case that the measured values deviate from the reference values, respectively.

Here, the step of measuring the thickness of the film is to measure the thickness of the film after measuring the temperature of the film on the same line as a transportation direction of the film so as to be able to sequentially measure the surface temperature and the thickness of the film at the same point of the film being transported.

Further, the step of measuring the temperature of the film is to measure the temperature of the film after measuring the thickness of the film on the same line as a transportation direction of the film so as to be able to sequentially measure the thickness and the surface temperature of the film at the same point of the film being transported.

In this case, the step of measuring the thickness of the film may include the steps of: measuring an outer diameter of the rotating roll by irradiating a laser toward a surface of the rotating roll in a state where the film is not transported through a laser displacement sensor, and setting the measured outer diameter as a default value; measuring a distance measurement value from the film by irradiating the laser onto the surface of the film through the laser displacement sensor during film transportation using the rotating rolls; and deriving the thickness of the film by subtracting the default value from the distance measurement value from the film.

### Advantageous Effects

The film temperature and thickness measurement apparatus and the measurement method using the same configured as described above according to the present disclosure can sequentially measure the surface temperature and the thickness at the same point of the film that is extruded or coating molded in an in-line method, and can change the conditions of various film manufacturing processes or can go through a process of thermal fixing and the like by comparing the measured corresponding data measurement values with the reference values.

That is, it is possible to predict in advance the temperature change and the material change of the film that is manufactured through the temperature and thickness measurement values of the film by using the film temperature and thickness measurement apparatus according to the present disclosure, and based on this, it is possible to manufacture the film with a uniform thickness.

In particular, since it is possible to sequentially measure the temperature and the thickness of the film at the same proximity location of the film that is transported after being extruded or coating molded, it is possible to reduce the time required for the manufacturing process without the necessity of the actual sample measurement process of the film products as in the related art.

### Brief Description of Drawings

FIG. 1 is a schematic view showing an in-line type film manufacturing process in the related art.
FIG. 2 is a schematic view showing an in-line type film manufacturing process to which a film temperature and thickness measurement apparatus according to the present disclosure is applied.
FIG. 3 is a schematic constitution diagram of a film temperature and thickness measurement apparatus according to the present disclosure.
FIG. 4 is a perspective view of a film temperature and thickness measurement apparatus according to the present disclosure.
FIG. 5 is a perspective view of main parts of a film temperature and thickness measurement apparatus according to the present disclosure.
FIG. 6 is a side view of a film temperature and thickness measurement apparatus according to the present disclosure.
FIG. 7 is a side view showing a structure of a thickness measurement unit according to the present disclosure.
FIG. 8 is a schematic view showing the thickness measurement principle of a thickness measurement unit according to the present disclosure.
FIG. 9 is a side view showing a structure of a temperature measurement unit according to the present disclosure.
FIG. 10 is a detailed view of main parts of a film temperature and thickness measurement apparatus according to the present disclosure.
FIG. 11 is a view showing a disposition state of a film temperature and thickness measurement apparatus according to the present disclosure.
FIG. 12 is a flowchart showing a film temperature and thickness measurement process according to the present disclosure.
FIG. 13 is a photograph that substitutes for the drawing in which a film temperature and thickness measurement method according to the present disclosure is compared with an existing thickness measurement method.

### [Explanation of symbols]

1: film 100: temperature and thickness measurement apparatus
110: transport unit 111: rotating roll
120: thickness measurement unit 121: guide rail
123: moving plate 125: first bracket
125a: first hinge shaft 127: laser displacement sensor
130: temperature measurement unit 131: second bracket
131a: second hinge shaft 133: infrared temperature sensor
140: controller

### Best Mode

Hereinafter, the constitution and operation of specific embodiments of the present disclosure will be described in detail with reference to the accompanying drawings.

Here, it is to be noted that in assigning reference numerals to constituent elements in the drawings, the same reference numerals denote the same constituent elements throughout the drawings even in case that the elements are shown in different drawings.

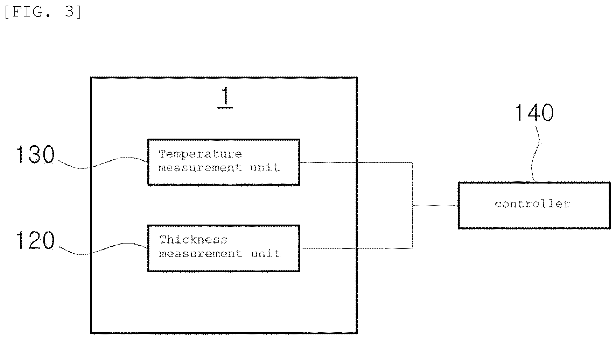

FIG. 2 is a schematic view showing an in-line type film manufacturing process to which a film temperature and thickness measurement apparatus according to the present disclosure is applied, and FIG. 3 is a schematic constitution diagram of a film temperature and thickness measurement apparatus according to the present disclosure.

Referring to FIGS. 2 and 3, a film temperature and thickness measurement apparatus 100 according to a preferred embodiment of the present disclosure may include a transport unit 110, a thickness measurement unit 120, a temperature measurement unit 130, and a controller 140.

For reference, hereinafter, for convenience in explanation, a case where the temperature and the thickness of a film 1 that is extrusion molded through an extruder 10 are measured by using the film temperature and thickness measurement apparatus 100 according to the present disclosure will be exemplarily illustrated and described. Of course, the present disclosure is not limited thereto, and even in a process of manufacturing the film 1 on which a coating layer (wet coating) is formed by applying a coating slurry on a base material, the temperature and the thickness of the film 1 on which a coating layer is formed can be measured by applying the measurement apparatus 100 according to the present disclosure.

A detailed description of the constitution of the present disclosure is as follows.

First, the transport unit 110 is to transport a polymer film 1 (hereinafter, abbreviated as a "film") that is extrusion molded from the extruder 10 in one direction, and the transport unit 110 is applied with an in-line method of a roll-to-roll structure, and thus the film 1 can be continuously manufactured.

Specifically, the transport unit 110 may include a plurality of rotating rolls 111 that receive power from a motor, and transport the film 1 while rotating at a predetermined speed.

In this case, the film temperature and thickness measurement apparatus 100 according to the present disclosure may be installed on any one of the plurality of rotating rolls 111.

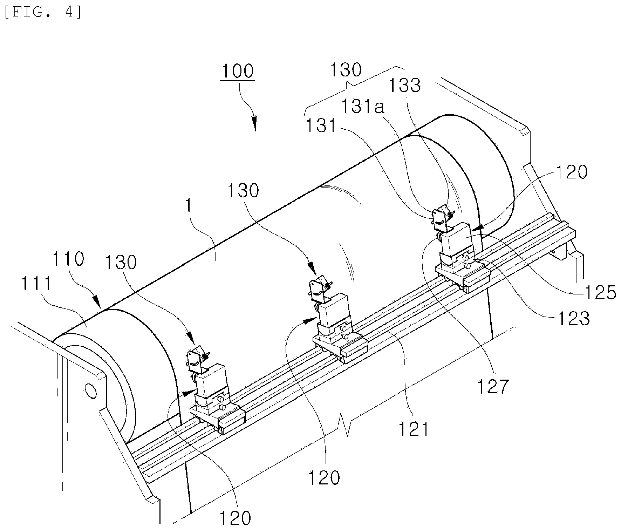

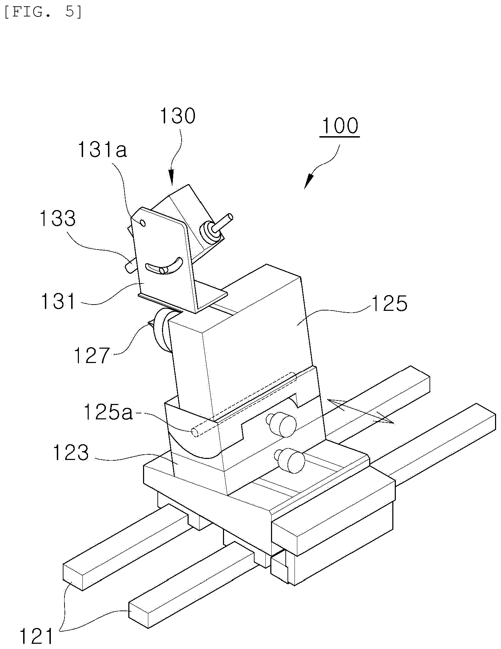

Referring to FIGS. 4 and 5, the thickness measurement unit 120 may be installed to be spaced apart at a predetermined interval from an outer periphery surface of the rotating roll 111, and may measure the thickness of the film 1 being transported in real time.

Specifically, the thickness measurement unit 120 may include: a guide rail 121 disposed to be spaced apart in parallel to a central axis line of the rotating roll 111; a moving plate 123 reciprocally coupled to the guide rail along a length direction of the guide rail 121 through reception of a power; and a laser displacement sensor 127 coupled onto the moving plate 123 through a first bracket 125, and configured to measure the thickness of the film 1 by irradiating a laser toward a surface of the film 1 being transported by the rotating roll 111.

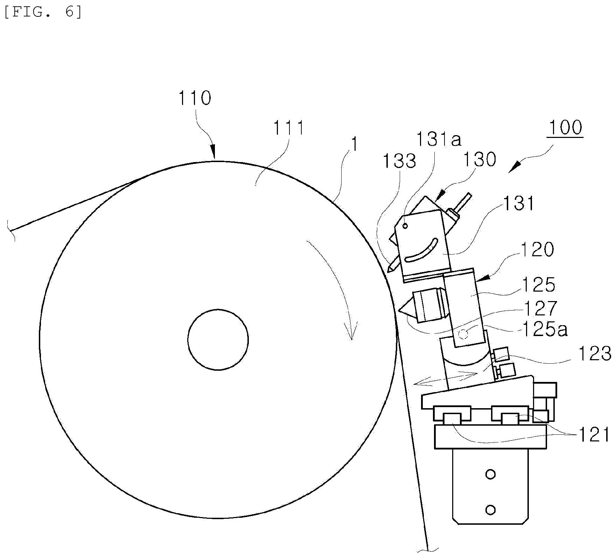

Referring to FIG. 6, the moving plate 123 may be reciprocally coupled to the guide rail 121 along the direction that crosses the length direction of the guide rail 121, and may adjust a gap distance from the outer periphery surface of the rotating roll 111. In this case, the gap distance of the moving plate 123 may be automatically adjusted through reception of the power, or may be manually adjusted. In the present disclosure, a case of manually adjusting the gap distance of the moving plate 123 is exemplified.

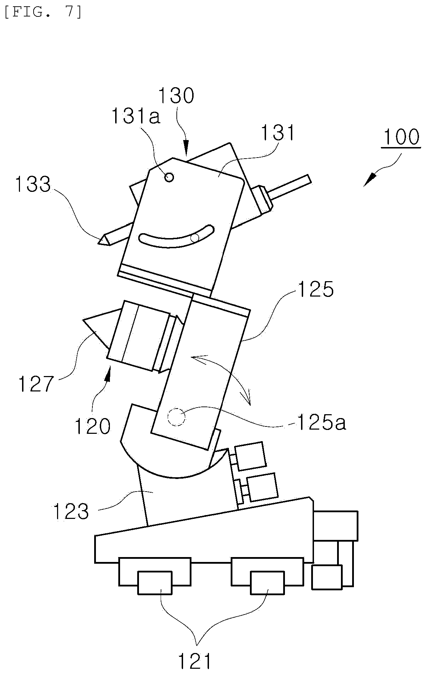

Referring to FIG. 7, the first bracket 125 may be coupled in a way of being rotatable by a predetermined angle along a transportation direction of the film 1 with a first hinge shaft 125a of the moving plate 123 as a center of rotation. Accordingly, an irradiation angle of a laser of the laser displacement sensor 127, which is irradiated toward the surface of the film 1, may be adjusted.

In this case, since the structure that slides and moves the laser displacement sensor 127 in a length direction of the film 1 or in a direction that crosses the length direction can be constituted by selectively applying various known constituent elements thereto, the detailed description thereof will be omitted.

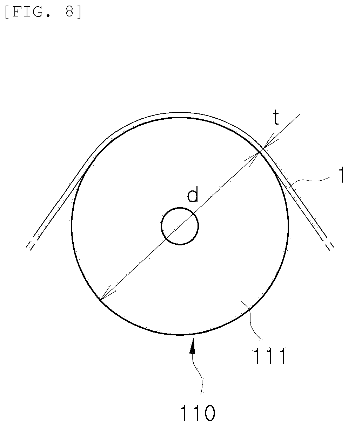

Referring to FIG. 8, according to the principle of measuring the thickness of the film 1 using the thickness measurement unit 120 as constituted above, an outer diameter d of the rotating roll 111 is first measured through the gap distance from the surface of the rotating roll 111 by irradiating the laser toward the surface of the rotating roll 111 on which the film 1 is not transported by using the laser displacement sensor 127, and the measured value is set as a default value. For reference, roundness or the like of the rotating roll 111 may be considered for the default value. Then, a distance measurement value from the film 1 is measured by irradiating the laser onto the surface of the film 1 through the laser displacement sensor 127 during transportation of the film 1 by using the rotating roll 111. Thereafter, the thickness t of the film 1 can be derived by subtracting the default value from the distance measurement value from the surface of the film 1 through the laser displacement sensor 127.

Referring again to FIG. 6, the temperature measurement unit 130 is disposed adjacent to the thickness measurement unit 120, and may measure in real time the surface temperature of the film 1 being transported.

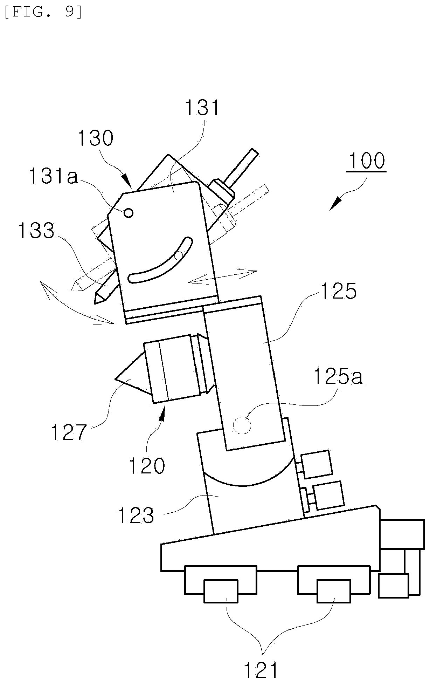

Specifically, referring to FIG. 9, the temperature measurement unit 130 may include: a second bracket 131 coupled to be able to move forward and backward along a direction (transportation direction of the film 1) that crosses a length direction of the rotating roll 111 on the first bracket 125; and an infrared temperature sensor 133 installed on the second bracket 131 and configured to measure a temperature of the surface of the film 1 that is transported by the rotating roll 111.

In this case, the infrared temperature sensor 133 may be coupled in a way of being rotatable by a predetermined angle along a transportation direction of the film 1 with a second hinge shaft 131a of the second bracket 131 as a center of rotation. Accordingly, an infrared irradiation location of the infrared temperature sensor 133 may be adjusted.

It is preferable that the temperature and thickness measurement apparatus 100 provided with the temperature measurement unit 130 and the thickness measurement unit 120 is installed on the first located rotating roll 111 (refer to FIG. 2) in the transportation direction of the film 1 among the plurality of rotating rolls 111.

That is, in the procedure in which the film 1 is transported by the plurality of rotating rolls 111 after the film 1 is extruded, the film 1 may be contracted or expanded by heat. Accordingly, accurate measurement data can be obtained by measuring the temperature and the thickness immediately after the film 1 is extrusion molded before the film 1 is contracted and expanded in the transporting procedure.

However, in the present disclosure, the temperature/thickness measurement locations of the film 1 using the measurement apparatus 100 are not specially limited. That is, the measurement apparatus 100 may be applied to the first rotating roll (chill or cooling roll) immediately after the film 1 extrusion process, or to the second or third located rotating roll, or to the rotating roll after a stretching process in a width direction or length direction of the film.

In this case, the temperature measurement unit 130 and the thickness measurement unit 120 may be disposed on the same line as the transportation direction of the film 1 so as to be able to sequentially measure the temperature and the thickness of the film 1 at the same point of the film 1 being transported. Of course, the disposition of the temperature measurement unit 130 and the thickness measurement unit 120 is not limited thereto, and the temperature measurement unit 130 and the thickness measurement unit 120 may be disposed adjacently in a width direction of the film 1 being transported, and the temperature and the thickness of the film at the proximity location may be measured. In the present disclosure, a case where the temperature measurement unit 130 and the thickness measurement unit 120 are disposed on the same line of the film 1 being transported will be exemplarily illustrated and described.

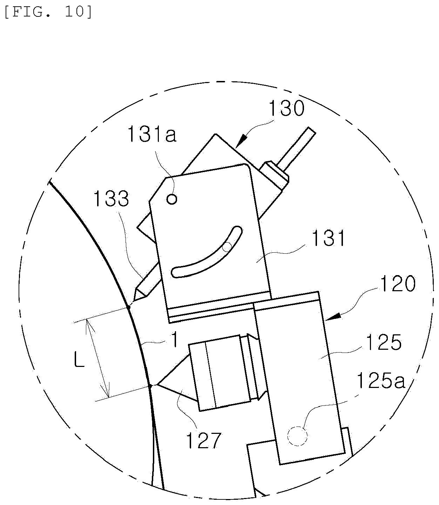

Referring to FIG. 10, it is preferable that as the measurement location L of the temperature measurement unit 130 and the thickness measurement unit 120, the same proximity location is sequentially measured within 0 to 30 mm, preferably, within 0 to 10 mm along the transportation direction of the film 1 in case that the film 1 is extrusion molded. That is, if the measurement location L of the temperature measurement unit 130 and the thickness measurement unit 120 exceeds 30 mm, an error may occur depending on the temperature change after the film extrusion.

Further, it is preferable that as the measurement location L of the temperature measurement unit 130 and the thickness measurement unit 120 in case that the film 1 is coating molded, the proximity location within 0 to 100 mm is measured according to the transportation direction of the film 1. That is, if the film 1 is coating molded, the film 1 is transported at a transporting speed that is faster than that in case of the extrusion molding. Accordingly, the range of the measurement location L may also be increased in proportion to the speed.

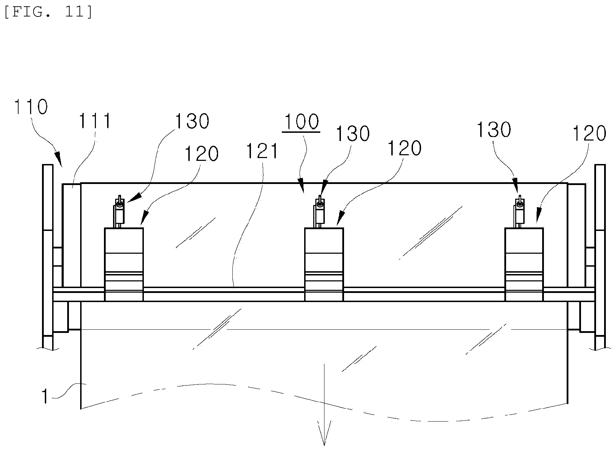

Referring to FIG. 11, a plurality of temperature measurement units 130 and thickness measurement units 120 having the same structures may be disposed to be spaced apart from each other along the length direction of the guide rail 121, and may sequentially measure the temperature and the thickness of the film 1 at plural points.

In this case, in the present disclosure, although a case where the thickness at the same point of the film 1 is measured after the temperature at a predetermined point of the film 1 being extrusion transported is first measured has been exemplarily illustrated and described, the present disclosure is not limited to such a case, and a case where the temperature of the film 1 is measured after the thickness of the film 1 being extrusion transported is first measured may be applied as a change.

That is, based on the direction from an upstream to a downstream of the transportation direction of the film 1 that is extrusion transported by the rotating rolls 111, the thickness measurement unit 120 may be formed on the upstream side, and the temperature measurement unit 130 may be formed on the downstream side. Further, based on the direction from the upstream to the downstream of the transportation direction of the film 1 that is extrusion transported by the rotating rolls 111, the temperature measurement unit 130 may be formed on the upstream side, and the thickness measurement unit 120 may be formed on the downstream side.

Meanwhile, the controller 140 (refer to FIG. 3) may determine whether the measured values measured through the thickness measurement unit 120 and the temperature measurement unit 130 deviate from reference values, respectively.

That is, the controller 140 may control to manufacture the film 1 with a uniform thickness by changing the condition of the process of manufacturing the film 1 being extrusion molded based on the thickness and temperature measurement values of the film 1 through the thickness measurement unit 120 and the temperature measurement unit 130.

As an example, the controller 140 may remove a local torsion that occurs during molding by performing heat treatment of the film 1 through stretching and thermal fixing after the extrusion molding of the film 1. Accordingly, shrinkage or wrinkles of the film 1 can be suppressed, and the uniform thickness of the film 1 can be maintained, so that the dimensional stability can be increased.

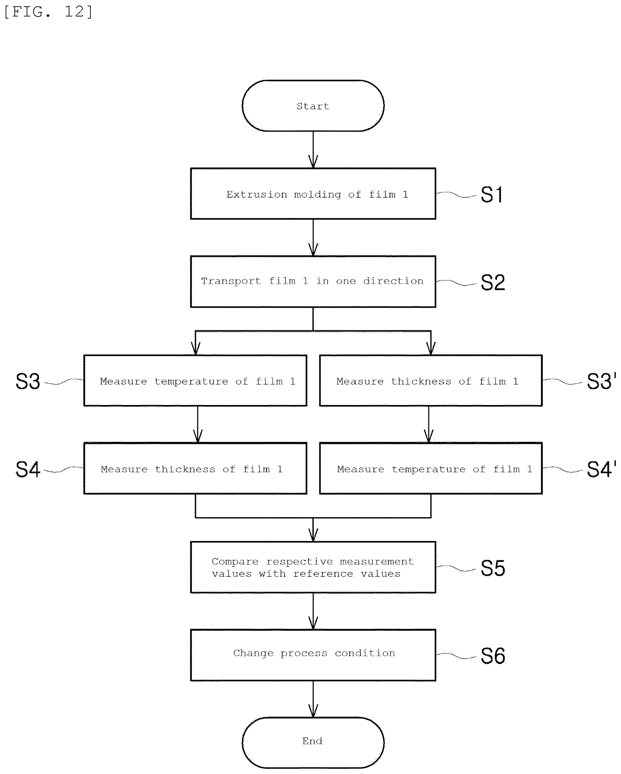

Hereinafter, a film temperature and thickness measurement process using the film temperature and thickness measurement apparatus 100 of the present disclosure will be described referring to FIG. 12.

First, the film is extrusion molded through the extruder 10 (S1).

Then, the film being extrusion molded is transported in one direction through the rotating rolls 111 (S2).

Thereafter, the temperature of the film 1 is measured by irradiating an infrared ray toward a predetermined point of the surface of the film 1 transported through the rotating roll 111 after being extrusion molded (S3).

In addition, the thickness of the film 1 is measured by irradiating the laser at the same point of the film 1 of which the temperature has been measured (S4).

In this case, although it is described in the present disclosure that the thickness of the film 1 is measured (S4) after the temperature of the film 1 is first measured (S3), the measurement order may be contrarily changed in a manner that the thickness of the film 1 is first measured (S3'), and then the temperature of the film 1 is measured by irradiating the laser toward the same point of the film 1 of which the thickness has been measured (S4').

That is, the thickness of the film 1 may be measured after the temperature of the film 1 is measured on the same line as the transportation direction of the film 1 so that the surface temperature and the thickness of the film at the same point of the film 1 being transported can be sequentially measured. Further, the temperature of the film 1 may be measured after the thickness of the film 1 is measured on the same line as the transportation direction of the film 1 so that the thickness and the surface temperature of the film at the same point of the film 1 being transported can be sequentially measured.

Further, the controller 140 compares and determines whether the measured temperature and thickness measurement values of the film 1 deviate from the reference values, respectively (S5), and if the measurement values deviate from the reference values, the condition of the process of manufacturing the film 1 is changed (S6).

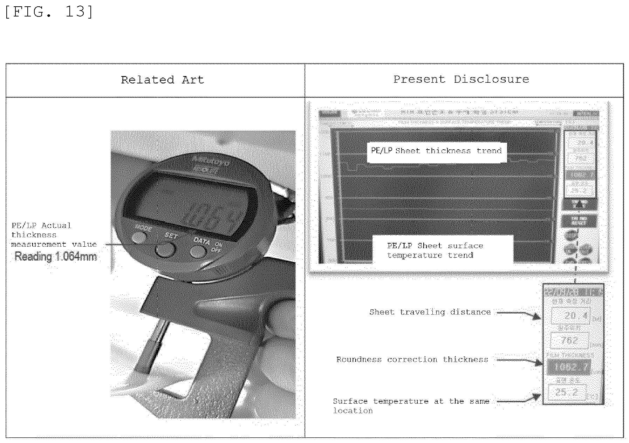

As illustrated in FIG. 13, the film temperature and thickness measurement apparatus 100 configured as described above according to the present disclosure can sequentially measure the surface temperature and the thickness at the same point of the film 1 that is molded in an in-line method, and can predict in advance the temperature change and the material change of the film by comparing in real time the measured measurement values with the reference values as well. Based on this, through the change of the conditions of the film manufacturing process or through the process such as thermal fixing or the like, the film with the uniform thickness can be manufactured.

In particular, since it is possible to sequentially measure the temperature and the thickness of the film 1 in real time during the extruding or coating process of the film 1, the time required for the manufacturing process can be reduced without the necessity of the actual sample measurement process of the film products as in the related art.

Although the present disclosure has been illustrated and described with reference to specific embodiments, the present disclosure is not limited to the above embodiments and various modifications and corrections can be made without departing from the technical spirit of the present disclosure.

## Claims

1. An apparatus for measuring a temperature and a thickness of a film being extruded and coating molded, the apparatus comprising:
a transport unit provided with rotating rolls configured to transport the film being molded in one direction;
a thickness measurement unit installed to be spaced apart from an outer periphery surface of the rotating roll and configured to measure the thickness of the film being transported;
a temperature measurement unit disposed to be adjacent to the thickness measurement unit and configured to measure a surface temperature of the film being transported; and
a controller configured to determine whether measured values measured through the thickness measurement unit and the temperature measurement unit deviate from reference values, respectively.

2. The apparatus according to claim 1, wherein the temperature measurement unit and the thickness measurement unit are disposed on the same line as a transportation direction of the film so as to be able to sequentially measure the surface temperature and the thickness of the film at the same point of the film being transported.

3. The apparatus according to claim 2, wherein the thickness measurement unit and the temperature measurement unit are disposed in order from an upstream to a downstream of the transportation direction of the film.

4. The apparatus according to claim 2, wherein the temperature measurement unit and the thickness measurement unit are disposed in order from an upstream to a downstream of the transportation direction of the film.

5. The apparatus according to claim 1, wherein the thickness measurement unit comprises:
a guide rail disposed to be spaced apart in parallel to a central axis line of the rotating roll;
a moving plate reciprocally coupled to the guide rail along a length direction of the guide rail through reception of a power; and
a laser displacement sensor coupled onto the moving plate through a first bracket, and configured to measure the thickness of the film by irradiating a laser toward a surface of the film being transported by the rotating roll.

6. The apparatus according to claim 5, wherein the moving plate is reciprocally coupled to the guide rail along a direction that crosses the length direction of the guide rail, and is configured to adjust a gap distance from the outer periphery surface of the rotating roll.

7. The apparatus according to claim 5, wherein the first bracket is coupled in a way of being rotatable by a predetermined angle along a transportation direction of the film with a first hinge shaft of the moving plate as a center of rotation, and is configured to adjust a laser irradiation angle of the laser displacement sensor.

8. The apparatus according to claim 5, wherein the temperature measurement unit comprises:
a second bracket coupled to be able to move forward and backward along a direction that crosses a length direction of the rotating roll on the first bracket; and
an infrared temperature sensor installed on the second bracket and configured to measure a temperature of the surface of the film that is transported by the rotating roll.

9. The apparatus according to claim 8, wherein the infrared temperature sensor is coupled in a way of being rotatable by a predetermined angle along a transportation direction of the film with a second hinge shaft of the second bracket as a center of rotation, and is configured to adjust an infrared irradiation location of the infrared temperature sensor.

10. The apparatus according to claim 2, wherein the temperature measurement unit and the thickness measurement unit are configured to measure a proximity location within 0 to 30 mm along the transportation direction of the film in case that the film is extrusion molded.

11. The apparatus according to claim 2, wherein the temperature measurement unit and the thickness measurement unit are configured to measure a proximity location within 0 to 100 mm along the transportation direction of the film in case that the film is coating molded.

12. A method for measuring a temperature and a thickness of a film, the method comprising the steps of:
forming a film through an extrusion or coating process;
transporting the film being molded in one direction through rotating rolls;
measuring a temperature of a film at a predetermined point by irradiating an infrared ray toward a surface of the film being transported by the rotating rolls;
measuring a thickness of the film by irradiating the laser at the same or proximity location of the surface of the film of which the temperature is measured;
determining whether measured values of the temperature and the thickness of the film deviate from reference values, respectively; and
changing a condition of the film manufacturing process in case that the measured values deviate from the reference values, respectively.

13. The method according to claim 12, wherein the step of measuring the thickness of the film is to measure the thickness of the film after measuring the temperature of the film on the same line as a transportation direction of the film so as to be able to sequentially measure the surface temperature and the thickness of the film at the same point of the film being transported.

14. The method according to claim 12, wherein the step of measuring the temperature of the film is to measure the temperature of the film after measuring the thickness of the film on the same line as a transportation direction of the film so as to be able to sequentially measure the thickness and the surface temperature of the film at the same point of the film being transported.

15. The method according to any one of claims 12 to 14, wherein the step of measuring the thickness of the film comprises the steps of:
measuring an outer diameter of the rotating roll by irradiating a laser toward a surface of the rotating roll in a state where the film is not transported through a laser displacement sensor, and setting the measured outer diameter as a default value;
measuring a distance measurement value from the film by irradiating the laser onto the surface of the film through the laser displacement sensor during film transportation using the rotating rolls; and
deriving the thickness of the film by subtracting the default value from the distance measurement value from the film.
